# EUROPEAN PATENT SPECIFICATION

(11) **EP 3 456 203 B1**
(45) Date of publication and mention of the grant of the patent: **14.10.2026**
(21) Application number: 18196111.1
(22) Date of filing: 02.03.2015
(51) Int. Cl.: A23D 9/00, C11C 3/10, A23G 1/38

(54) **FAT COMPOSITION AND FAT BLEND**
FETTZUSAMMENSETZUNG UND FETTMISCHUNG
COMPOSITION DE GRAISSE ET MÉLANGE DE GRAISSES

(30) Priority: 03.03.2014 EP 14275038
(43) Date of publication of application: 20.03.2019
(62) Document number(s) of the earlier application(s) in accordance with Art. 76 EPC: 15707369.3 / 3 113 623
(73) Proprietor: Bunge Loders Croklaan B.V., 1521 AZ Wormerveer (NL)
(72) Inventor: Bhaggan,, Krishnadath, 1521 AZ Wormerveer (NL); Dekker,, Willem, 1521 AZ Wormerveer (NL); Ma,, Jun, 1521 AZ Wormerveer (NL); Werleman,, Jeanine, 1521 AZ Wormerveer (NL)
(74) Representative: Potter Clarkson

(56) References cited:
- ALEJANDRO G MARANGONI ET AL: "Trends in Interesterification of Fats and Oils", 1 January 2012 (2012-01-01), XP055546666, Retrieved from the Internet <URL:http://ilsina.org/wp-content/uploads/sites/6/2016/06/PPT1Marangoni-June-2012.pdf> [retrieved on 20190123]
- MI-SUN JEON, ET AL.: "Modification of Palm Mid Fraction with Stearic Acid by Enzymatic Acidolysis Reaction", JOURNAL OF THE KOREAN SOCIETY OF FOOD SCIENCE AND NUTRITION, vol. 38, no. 4, 2009 - 2009, pages 479 - 485, XP002788287
- LJILJANA MOJOVIC ET AL: "Rhizopus arrhizus lipase-catalyzed interesterification of the midfraction of palm oil to a cocoa butter equivalent fat", ENZYME AND MICROBIAL TECHNOLOGY, vol. 15, no. 5, 1 May 1993 (1993-05-01), US, pages 438 - 443, XP055546688, ISSN: 0141-0229, DOI: 10.1016/0141-0229(93)90132-L

## Description

This invention relates to a fat composition, to a fat blend comprising the composition, and to confectionery products.

Triglyceride fats are used extensively in the confectionery industry. Many fats require a tempering step to convert the fat into the most stable crystalline form.

Chocolate is composed of triglycerides in unstable polymorphic crystal forms and has a tendency to undergo physical changes associated with the transitions of the unstable forms into a more stable form. These physical changes are likely to affect adversely the appearance and/or texture of the chocolate. Depending on the process conditions used, cocoa butter can be crystallized into different crystal forms, each of which possess a distinct melting point and density. The purpose of tempering is to produce sufficient, uniform seed crystals to ensure that the temper state is stable and that subsequent crystallisation of the whole of the chocolate mass occurs into the stable crystalline form. Properly tempered chocolate is important for qualities such as mould release (contraction), hardness, snap, mouthfeel, flavour release, gloss and resistance to fat bloom.

Similarly, some fats intended to replace cocoa butter in chocolate-like confectionery need to be tempered for the same reasons.

Crystallisation starters are frequently added to triglyceride fats in order to facilitate tempering of the fats. Modern Technology of Confectionery Industries with Formulae & Processes, Minni Jha, 2003, Asia Pacific Business Press Inc, 8178330997, page 208 describes crystallisation starters as being high melting triglycerides with a melting point of 55 °C to 70 °C, which, when included in a fat in a proportion of 2.5 to 3.0 % aid the tempering procedure. The crystallisation starter forms crystals as the fat is cooled from the molten state and these crystals allow the fat to be produced in the desired polymorphic crystal form.

EP-A-803196 discloses a hard butter additive composition comprising the middle melting point fraction of random interesterified palm stearin. The hard butter additive composition is used to prevent fat blooming and/or graining and improve mold removability of hard butter products such as chocolate or centre cream without a tempering process.

WO 2012/084420 describes a water-in-oil emulsion comprising 50 to 85 wt. % of an aqueous phase and 15 to 50 wt. % of a fat phase, wherein the fat phase comprises HOH triglycerides in an amount of 8 to 50 % of the total weight of the fat phase, and HHH triglycerides in an amount of 1 to 6 % of the total weight of the fat phase, wherein at least 25 % of said HHH triglycerides contain at least two different fatty acid residues, where "H" denotes a saturated fatty acid residue with 16 to 24 carbon atoms and "O" an oleic acid residue.

EP-A-2839750 relates to a fat composition that can be used as a crystallization starter and which comprises: greater than 70 % by weight palmitic acid; and from 2 to 12 % by weight P2O triglycerides (i.e., triglycerides having two palmitoyl groups and one oleoyl group, PPO and POP), wherein P is palmitic acid and O is oleic acid; wherein the fat composition has a weight ratio of SSO:SOS triglycerides of greater than 0.3, and wherein S is stearic or palmitic acid and O is oleic acid.

Marangoni *et al*., (20120101) (XP055546666, http://ilsina.org/wp-content/uploads/ sites/6/2016/06/PPT1Marangoni-June-2012.pdf) discusses trends in interesterification of fats and oils and describes a method for producing cocoa butter equivalents *via* enzymatic interesterification of palm oil mid-fraction and stearic acid ethyl ester.

Mi-Sun Jeon et al. (Journal of the Korean society of food science and nutrition, (2009), vol. 38, no. 4, pages 479 - 485, XP002788287) describes modification of palm mid fraction with stearic acid by enzymatic acidolysis reaction with a view to obtaining a high-melting fat which satisfies the needs of a cocoa butter alternative.

Mojovic et al. (Enzyme and microbial technology, US, (19930501), vol. 15, no. 5, doi: 10.1016/0141-0229(93)90132-L, ISSN 0141-0229, pages 438 - 443, XP055546688) describes Rhizopus arrhizus lipase-catalysed interesterification of the mid fraction of palm oil to a cocoa butter equivalent fat.

Often, food products that contain liquid oils also contain a structuring agent. Structuring agents are generally fats that are solid at room temperature (20 °C) and that provide structure to the oil phase. For example, some confectionery filling fats are mixtures of liquid oil and a structuring agent with the structuring agent providing a degree of firmness to the mixture by virtue of forming a crystal network in the liquid oil phase.

There remains a need for fat compositions that can be used as crystallization starters that can improve the crystallization of fat or fat blends in confectionery or bakery applications without adversely affecting the desirable properties of the fat or fat blends. In particular, there is a need for crystallization starters that are based on non-hydrogenated fats. There is also a need for crystallization starters having these advantages that can provide a structuring effect in a liquid oil or fat.

The scope of the present invention is defined in the appended claims.

According to the present invention, there is provided a fat composition comprising:
greater than 75 % by weight palmitic acid and stearic acids;
from 1 to 25 % by weight oleic acid; and
greater than 20 % by weight of combined P₂St and PSt₂ triglycerides,
wherein P is palmitic acid and St is stearic acid;
wherein the fat composition has a weight ratio of P₂St: PPP triglycerides of greater than 0.5.

Also described herein is a fat blend comprising from 0.5 to 10 % by weight of the fat composition of the invention.

A further aspect of the invention is a process for making the fat composition of the invention comprising the following steps:
(a) providing a palm oil stearin (preferably by fractionating palm oil) having an iodine value (IV) of from 10 to 40;
(b) interesterifying the palm oil stearin of step (a) with a source of stearic acid; and
(c) fractionating the interesterified product of step (b) to produce a stearin fraction at a yield based on the interesterified product of step (b) of from 8 to 25 % by weight.

Also described herein is a confectionery product comprising:
at least 20% by weight of the fat blend according to the invention; and
at least 30 % by weight sugar.

The invention also provides the use of a fat composition according to the invention to promote, enhance or accelerate the crystallization of fat or fat blends in confectionery or bakery applications.

Also provided by the invention is the use of a fat composition according to the invention for providing structure in a fat or a fat blend.

Further provided by the invention is the use of a fat composition according to the invention to promote, enhance or accelerate the crystallization of fat or fat blends and to provide structure in the fat or fat blend.

The fat composition of the invention comprises greater than 75 % by weight in total of palmitic acid and stearic acids. Most if not all of the palmitic and stearic acids are present in covalently bonded form in glycerides (i.e., triglycerides and any mono- and di-glycerides that might be present). Preferably, the fat composition of the invention comprises greater than 80 % by weight, such as from 80 % to 90 % by weight, of total palmitic and stearic acid.

The fat composition of the invention preferably comprises from 10 % to 60 % by weight of stearic acid.

The fat composition of the invention preferably comprises from 30 to 75 % by weight palmitic acid.

The fat composition of the invention comprises from 1 to 25 % by weight of oleic acid, more preferably from 5 to 25 % by weight, such as from 5 to 20 % by weight, 7 to 18 % by weight or 9 to 15 % by weight. Most if not all of the oleic acid is present in covalently bonded form in glycerides (i.e., triglycerides and any mono- and di-glycerides that might be present).

The fat composition of the invention comprises greater than 20 % by weight of combined P₂St and PSt₂ triglycerides, wherein P is palmitic acid and St is stearic acid, preferably from 20 % to 60 % by weight of combined P₂St and PSt₂ triglycerides, even more preferably from 25 % to 55 % by weight of combined P₂St and PSt₂ triglycerides.

The fat composition of the invention preferably comprises greater than 55 % by weight in total of the triglycerides PPP, P₂St and PSt₂, wherein P is palmitic acid and St is stearic acid, preferably greater than 58 % by weight, most preferably from 60 to 70 % by weight.

As used herein, P₂St includes PPSt and PStP and PSt₂ includes PStSt and StPSt.

All percentages of fatty acids used herein refer to fatty acids bound as acyl groups in glycerides and are by weight based on total C12 to C24 fatty acids present in the fat composition as acyl groups in glycerides. The levels of fatty acids present in the compositions of the invention can be determined by methods well-known to those skilled in the art such as GC-FAME.

The term fatty acid, as used herein, refers to straight chain saturated or unsaturated (including mono-, di- and poly- unsaturated) carboxylic acids having from 12 to 24 carbon atoms. The term fat refers generally to compositions that contain a mixture of fatty acid glycerides.

The fat composition of the invention typically comprises more than 90 % by weight of triglycerides, more preferably at least 95 % by weight triglycerides.

The fat composition has a weight ratio of P₂St:PPP triglycerides of greater than 0.5, preferably from 0.5 to 5, such as from 0.5 to 4.

Some fat compositions of the invention that are produced by a process that involves chemical interesterification have a weight ratio of SSO:SOS triglycerides of greater than 0.3, preferably greater than 0.5, even more preferably greater than 0.7, wherein S is stearic or palmitic acid and O is oleic acid. For example SSO includes PPO, PStO, StPO and StStO, where P is palmitic acid and St is stearic acid.

The fat composition of the invention is preferably the stearin fraction of a product obtained by interesterifying a mixture of palm oil stearin and stearic acid. Interesterification may be carried out, for example, chemically using catalysts, such as bases (e.g., sodium methoxide), or enzymatically e.g., using a lipase e.g., from *Rhizopus oryzae* or *Thermomyces lanuginosus.*

Fractionation of fats and oils into higher and lower melting fractions is a technique that is well-known to those skilled in the art. The lower melting fraction is termed an olein and the higher melting fraction is called a stearin. Fractionation may be carried out in the presence of a solvent (wet), such as acetone, or without a solvent (dry). In particular, the fractionation in (c) of the process of the invention may be carried out by dry fractionation.

The fat composition of the invention preferably comprises from 5 to 50 % by weight of the triglyceride PPP, wherein P is palmitic acid.

The fat composition preferably comprises more than 12 % by weight of stearic acid, more preferably from 13 to 60 % % by weight of stearic acid.

The saturated fatty acid (SAFA) content of the fat composition of the invention is preferably from 75 to 95 %, preferably 80 to 90 %, by weight based on fatty acids present. The monounsaturated fatty acid (MUFA) content of the fat composition of the invention is preferably from 1 to 25 % by weight, more preferably from 5 to 20 % by weight, based on fatty acids present.

The physical properties of fats are sometimes defined in terms of N values. These indicate the percentage of solid fat in the composition at a given temperature. Thus, the term Nx refers to solid fat content at a temperature of x °C, measured by NMR pulse techniques. Methods for determining N values are ISO method 8292-1 or AOCS Cd 16b-93. The fat compositions of the invention preferably have an N10 of greater than 90 and an N40 of less than 80, such as less than 75 e.g., from 60 to 80.

A preferred fat composition of the invention comprises:
greater than 75 % by weight palmitic acid and stearic acids
from 5 to 25 % by weight oleic acid; and
from 25 to 60 % by weight of combined P₂St and PSt₂ triglycerides, wherein
P is palmitic acid and St is stearic acid;
wherein the fat composition has a weight ratio of P₂St:PPP triglycerides of from 0.5 to 5.

Another preferred fat composition of the invention comprises:
from 75 to 95 % by weight palmitic acid and stearic acids;
from 5 to 20 % by weight oleic acid;
from 5 to 50 % by weight of the triglyceride PPP; and
from 20 to 60 % by weight of combined P₂St and PSt₂ triglycerides, wherein
P is palmitic acid and St is stearic acid;
wherein the fat composition has a weight ratio of P₂St:PPP triglycerides of from 0.5 to 5.

A further preferred fat composition of the invention is a stearin fraction of an interesterified mixture of palm oil stearin and stearic acid, which comprises:
greater than 75 % by weight palmitic acid and stearic acids;
from 5 to 20 % by weight oleic acid; and
greater than 20 % by weight of combined P₂St and PSt₂ triglycerides,
wherein P is palmitic acid and St is stearic acid;
wherein the fat composition has a weight ratio of P₂St:PPP triglycerides of greater than 0.5.

The fat blend described herein comprises from 0.5 to 10 % by weight of the fat composition of the invention, preferably from 1 to 7 % by weight, such as from 2 to 5 %, or from 2.5 to 3.5 %, together with one or more other fats as the balance of the fat blend.

The one or more other fats in the fat blend preferably include non-hydrogenated palm fractions and/or lauric fats.

The fat blend may comprise at least 30% by weight of one or more non-hydrogenated palm fractions and/or a liquid oil, such as sunflower oil, rape seed oil, high oleic sunflower oil or a mixture of these oils. Preferably, the non-hydrogenated palm fraction is a palm olein, such as a palm olein having an IV of greater than 55 or greater than 60.

In another embodiment, the fat blend comprises at least 80% by weight of a lauric fat component. The lauric fat component is preferably selected from the group consisting of coconut oil, palm kernel oil, fractions of coconut oil, fractions of palm kernel oil, and mixtures thereof.

Described here is a fat blend comprising:
(i) from 1 to 5 % by weight of a stearin fraction of an interesterified mixture of palm oil stearin and a source of stearic acid, such as shea olein, which comprises:
   greater than 75 % by weight palmitic acid and stearic acids;
   from 5 to 25 % by weight oleic acid; and
   greater than 20 % by weight of combined P₂St and PSt₂ triglycerides, wherein P is palmitic acid and St is stearic acid;
   wherein the fat composition has a weight ratio of P₂St:PPP triglycerides of greater than 0.5; and
(ii) from 95 to 99 % by weight of one or more other fats selected from: non-hydrogenated palm fractions; blends of non-hydrogenated palm fractions with liquid oils; lauric fats; and mixtures thereof.

The fat composition of the invention and fat blend described herein are preferably of vegetable origin. Fats of vegetable origin are obtained directly or indirectly from vegetable sources. The vegetable fats are preferably refined. The term "refined", as used herein, refers to processes in which the purity of a fat is increased by a process which comprises at least the steps of bleaching, followed by filtering and deodorising (such as by steam refining). The fats are typically not hydrogenated.

Since vegetable fats do not contain significant amounts of cholesterol, the fat compositions of the invention and fat blends described herein preferably contain less than 1%, more preferably less than 0.5%, by weight of cholesterol.

Also, since non-hydrogenated vegetable fats do not contain significant amounts of trans-fats, the fat compositions of the invention and fat blends described herein preferably contain less than 1%, more preferably less than 0.5%, by weight of trans fatty acids.

The fat blend is typically not in the form of an emulsion (such as a water-in-oil or oil-in-water emulsion).

The process for making the fat composition of the invention may comprise (a) fractionating a palm oil to obtain a palm oil stearin having an iodine value (IV) of from 10 to 40; (b) interesterifying the palm oil stearin thus obtained with stearic acid; and (c) fractionating the interesterified product of step (b) (preferably by dry fractionation) to produce a stearin fraction at a yield based on the interesterified product of step (b) of from 8 to 25 % by weight.

The interesterification in (b) may be carried out chemically or enzymatically, but is preferably chemical randomization. The interesterification is preferably carried out in the presence of a suitable catalyst. Sodium methoxide is a preferred catalyst for chemical randomization.

Iodine value may be determined by AOCS Cd 1c-85.

A preferred process for making the fat composition of the invention comprises (a) fractionating a palm oil to obtain a palm oil stearin having an iodine value (IV) of from 10 to 40; (b) interesterifying the palm oil stearin thus obtained with stearic acid; and (c) fractionating the interesterified product of step (b) to produce a stearin fraction at a yield based on the interesterified product of step (b) of from 8 to 25 % by weight.

Also described herein is a process for comprising (a) fractionating a palm oil to obtain a palm oil stearin having an iodine value (IV) of from 10 to 40; (b) interesterifying the palm oil stearin thus obtained with shea olein; and (c) dry fractionating the interesterified product of step (b) at a temperature of from 30 to 50 °C to produce a stearin fraction at a yield based on the interesterified product of step (b) of from 8 to 25 % by weight.

Yet another preferred process for making the fat composition of the invention comprises (a) fractionating a palm oil to obtain a palm oil stearin having an iodine value (IV) of from 20 to 40; (b) interesterifying the palm oil stearin thus obtained with stearic acid; and (c) fractionating the interesterified product of step (b) by solvent fractionation using acetone as solvent at a temperature of from 15 to 30 °C to produce a stearin fraction at a yield based on the interesterified product of step (b) of from 8 to 25 % by weight.

The fat composition of the invention may be used to promote, enhance or accelerate the crystallization of fat or fat blends in confectionery or bakery applications. In other words, the fat composition may be used as a crystallization starter.

Surprisingly, not only does the fat composition of the invention perform as a crystallization starter, it can also provide structuring properties in the fat blend. Consequently, the hardness of the fat blend can be increased, making it more useful in certain food applications.

The fat blend may have a hardness at 20 °C that is greater than that of the one or more fats in the blend without the composition of the invention.

The fat composition of the invention and fat blend described herein may be used in a confectionery product.

The confectionery product described herein comprises at least 20% by weight of the fat blend described herein and at least 30 % by weight sugar.

The confectionery product is typically a chocolate-like product and may, for example, be selected from bars, fillings, biscuit creams and confectionery coatings. The confectionery products will preferably comprise one or more further ingredients such as skimmed milk powder, cocoa butter, nut based material (e.g., hazelnut pieces and/or hazelnut paste) and emulsifier (e.g., lecithin, PGPR, sorbitan tristearate or a mixture thereof). Further optional components include flavouring (e.g., vanilla, vanillin, mint, orange, etc), colourants and inclusions such as confectionery and fruit pieces.

The confectionery product described herein comprises sugar. Sugars include, for example, sucrose, glucose, fructose and mixtures thereof. The sugar is typically sucrose. The sugar is preferably powdered. Preferably, the sugar is present in the confectionery product in an amount of from 30 to 70 % by weight, more preferably from 35 to 55 % by weight, even more preferably from 40 to 50 % by weight, based on the weight of the composition.

The confectionery product described herein preferably comprises the fat blend in an amount of from 20 to 50 % by weight, such as from 25 to 40 % by weight.

Preferably, the confectionery product comprises at least 5% of milk powder, vegetable milk powder, dairy powder or a mixture thereof. A preferred confectionery product is a confectionery filling comprising at least 5% of a nut based material.

Lecithin is a preferred emulsifier and is preferably present in an amount of up to 1 % by weight of the confectionery product, such as from 0.1 to 1 % by weight.

The confectionery product may comprise cocoa powder, more preferably in an amount of up to 15 % by weight of the confectionery product, such as from 1 to 15 % by weight.

A preferred confectionery product comprises from 35 to 55 % by weight of sugar and from 25 to 50 % by weight of a fat blend which comprises:
(i) from 1 to 5 % by weight of a stearin fraction of the interesterification product of a palm oil stearin with stearic acid which comprises:
   greater than 75 % by weight palmitic acid and stearic acids;
   from 5 to 25 % by weight oleic acid; and
   from 25 to 60 % by weight of combined P₂St and PSt₂ triglycerides, wherein P is palmitic acid and St is stearic acid;
   wherein the fat composition has a weight ratio of P₂St:PPP triglycerides of from 0.5 to 5; and
(ii) from 95 to 99 % by weight of one or more other fats selected from: non-hydrogenated palm fractions; blends of non-hydrogenated palm fractions with liquid oils; lauric fats; and mixtures thereof.

It will be appreciated that the percentage amounts of all of the components in the compositions of the invention, including those not mentioned, will add up to 100 %.

Coatings may be applied to confectionery or to a bakery product. Confectionery includes ice cream. The confectionery products may also be used as coatings on products that are sold and/or consumed at ambient temperature (i.e., from 5 to 30 °C).

The confectionery products may be used to apply a partial or complete coating to a base product which is preferably a bakery product. Bakery products are typically baked in an oven. The bakery products are preferably made using flour. Examples of bakery products include biscuits, cookies, cakes, donuts and pastries. Cupcakes are particularly preferred examples of baked confectionery products for the invention.

Coated bakery products can be produced by melting the confectionery product (e.g., above 35 °C), applying it to an uncoated bakery product (e.g., by pouring it onto the uncoated bakery product or by immersing the uncoated bakery product in it) and lowering the temperature to solidify the confectionery product by allowing it to cool (or by forced cooling). Suitable methods are well-known to those skilled in the art.

The coated bakery products may be further decorated with ingredients that adhere to the coating such as icing and/or chocolate strands or chips or sugar strands (which can be of a single colour or multi-coloured).

Confectionery products may also be coated with a composition of the invention. Suitable confectionery products include chocolates, chocolate-like products and jellies.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention. For example, the preferred features of the fat composition may be applied when the fat composition is used in the fat blend described herein and the preferred features of the fat blend may be applied when the fat blend is used in the confectionery product.

The following non-limiting examples illustrate the invention and do not limit its scope in any way. In the examples and throughout this specification, all percentages, parts and ratios are by weight unless indicated otherwise.

### EXAMPLES (reference examples have been designated with an asterisk (*))

### Example 1*

About 1200 gram of a blend of 40 % by weight palm stearin with an iodine value of 14 and 60 % by weight shea olein was chemically interesterified using sodium methoxide. The interesterified blend was dry fractionated at 40°C. The oil was first heated to 70°C and then cooled down to 35°C to 45°C as follows:
from 70°C down to 40°C to 47°C in 3 to 7 hours,
hold for 2 to 8 hours at 40°C to 47°C and
cooled further to 35°C to 45°C in 5 to 10 hours and hold at this temperature for 5 to 10 hours.

The crystals formed were separated by means of filter pressing. The slurry was pressed using the following program:
increase pressure from 0 - 24 bar in 60 min and squeeze 24 bar for 30 min.

In this way, about 19% stearin yield was obtained. The analytical results are shown in Table 1 (Product 1).

This stearin fraction is suitable for replacing hydrogenated palm oil 60 (hPO60) as crystallization/structuring agent.

### Example 2*

About 890 gram of a blend of 80 % by weight palm stearin with an iodine value of 34 and 20 % by weight shea olein was chemically interesterified using sodium methoxide. The interesterified blend was dry fractionated at 37°C to 45°C. The oil was first heated to 70°C and then cooled down to 37°C to 45°C as follows:
from 70°C down to 48°C to 52°C in 1 to 5 hours,
hold for 2 to 6 hours at 48°C to 52°C and
cooled further to 37°C to 45°C in 5 to 10 hours and hold at this temperature for 5 to 10 hours.

The crystals formed were separated by means of filter pressing. The slurry was pressed using the following program:
increase pressure from 0 - 24 bar in 60 min and squeeze 24 bar for 30 min.

In this way, about 20% stearin yield was obtained. The analytical results are shown in Table 1 (Product 2).

This stearin fraction is suitable for replacing hydrogenated palm oil 60 (hPO60) as crystallization/ structuring agent.

### Example 3

About 1200 gram of a mixture of 50 % by weight palm oil mid fraction (PMF IV34) and 50 % by weight stearic acid was interesterified, which reaction was catalyzed by a 1,3-specific lipase derived from *Rhizopus oryzae.* The interesterified PMF (in(PMFIV34)) was solvent fractionated using acetone as solvent at 20°C to 25°C. The solvent/oil mixture was cooled down to 20°C to 25°C, while stirring. Formed crystals were filtered off and the solvent was evaporated by means of distillation. The top stearin fraction obtained (about 10 % yield) could be used as an alternative for hydrogenated palm oil (hPO 60). The analytical results are shown in Table 1 (Product 3).

**Table 1. Analytical results of different structuring agents as prepared in Examples 1-3.**

| | Comparative example | Product 1 of Example 1 | Product 2 of Example 2 | Product 3 of Example 3 |
|---|---|---|---|---|
| | PO60 | | | |
| IVFAME HIRES | 0.3 | 13.7 | 15.7 | 9.9 |

| FAME analysis | | | | |
|---|---|---|---|---|
| SAFA | 99.7 | 86 | 84.3 | 88.9 |
| MUFA | 0.3 | 12.1 | 13.1 | 10.8 |
| PUFA | 0 | 1.9 | 2.5 | 0.4 |
| C12:0 | 0.4 | 0.3 | 0.2 | 0 |
| C14:0 | 1.4 | 0.7 | 1 | 0.4 |
| C16:0 | 58.8 | 52.1 | 68.5 | 35.8 |
| C17:0 | 0.2 | 0.2 | 0 | 0.1 |
| C18:0 | 38.3 | 31.2 | 13.8 | 51 |
| C18:1 | 0.3 | 12 | 12.9 | 10.8 |
| C18:2 | 0 | 1.8 | 2.5 | 0.3 |
| C18:3 | 0 | 0.1 | 0.1 | 0 |
| Total Trans | 0.1 | 0.1 | 0.2 | 0.1 |
| C20:0 | 0.5 | 1.3 | 0.7 | 1.2 |
| C22:0 | 0.1 | 0.1 | 0.1 | 0.1 |
| C22:1 | 0 | 0 | 0 | 0 |
| C24:0 | 0.1 | 0.1 | 0.1 | 0.1 |

| Triglyceride composition | | | | |
|---|---|---|---|---|
| MPP | 2 | 1 | 1.9 | 0.3 |
| MOM | 0 | 0.1 | 0.1 | 0 |
| PPP | 27 | 20 | 42 | 7.2 |
| MOP | 0 | 0.3 | 0.7 | 0 |
| MLP | 0.2 | 0.4 | 0.2 | 0.1 |
| PPSt | 39.8 | 30.3 | 22.3 | 26.3 |
| POP | 0 | 5.8 | 11.1 | 2 |
| PLP | 0.1 | 0.9 | 2 | 0.1 |
| PStSt | 24.2 | 16.7 | 4.6 | 27.7 |
| POSt | 0 | 6.9 | 3.8 | 10.6 |
| POO | 0.1 | 3 | 4.5 | 0.1 |
| PLSt | 0 | 0.8 | 0.4 | 0.2 |
| PLO | 0 | 1 | 1.6 | 0.1 |
| PLL | 0 | 0.1 | 0.2 | 0 |
| StStSt | 5.4 | 3.8 | 0.6 | 6.1 |
| StOSt | 0.6 | 3.3 | 1.2 | 17.5 |
| StOO | 0 | 1.6 | 0.7 | 0.1 |
| StLSt | 0.1 | 0.2 | 0.1 | 0.4 |
| OOO | 0 | 0.9 | 0.7 | 0 |
| StLO | 0 | 0.4 | 0.2 | 0 |
| OLO | 0 | 0.4 | 0.4 | 0 |
| StLL | 0 | 0 | 0.1 | 0 |
| OLL | 0 | 0.5 | 0.2 | 0 |
| AStSt | 0.3 | 0 | 0 | 0.3 |
| AOSt | 0 | 0.2 | 0 | 0.5 |
| AOO | 0 | 0.1 | 0 | 0 |
| ALSt | 0 | 0 | 0 | 0 |
| Others | 0.2 | 1.2 | 0.5 | 0.1 |
| SUMSOS | 0.6 | 16 | 16.1 | 30.1 |

| Solid fat content in % | | | | |
|---|---|---|---|---|
| US-N10 | 99 | 93 | 95 | 99 |
| US-N20 | 98 | 92 | 92 | 98 |
| US-N25 | 98 | 89 | 89 | 89 |
| US-N30 | 98 | 86 | 85 | 81 |
| US-N35 | 98 | 81 | 79 | 83 |
| US-N40 | 97 | 74 | 71 | 75 |
| MDP (Mettler Drop Point) | 61.5 | 57.3 | 56.5 | 60.5 |

| | | | | |
|---|---|---|---|---|
| US-Nx refers to solid fat content determined by NMR on unstabilised fat at x °C MDP is the Mettler dropping point IVFAME refers to calculated iodine value Cx:y refers to a fatty acid having x carbon atoms and y double bonds; levels determined by GC-FAME M, O, P, St, L and A refer to myristic, oleic, palmitic, stearic, linoleic and arachidic acids, respectively Triglyceride composition MPP, etc, was determined by GC (ISO 23275) and includes triglycerides having the same fatty acids in different positions e.g., MPP includes MPP and PMP SUMSOS refers to total SOS (S is stearic or palmitic acid and O is oleic acid) | | | | |

### Example 4

The structuring property was determined by measuring the hardness. Palm olein with iodine value of 64 was used as liquid oil. To 120 gram POflV64 was added 3% (wt) of the Products 1 - 3. The oil blend was heated to 60°C followed by cooling down to room temperature. The cooled samples were stored for 3 days at 10°C. The samples were measured using a Brookfield texture analyzer. Samples were taken from the refrigerator (10°C) and penetrated once with a 12.7 mm diameter plastic cylindrical probe. The maximal force (measured in compression) was recorded and mentioned as maximal hardness. The speed and distance of penetration were set to 2.0 mm/s and 10 mm, respectively. The results are shown in Table 2.

**Table 2. Hardness measured at room temperature of different blends stored at 10°C for 3 days.**

| | Comparative example | Product 1 of Example 1* | Product 2 of Example 2* | Product 3 of Example 3 |
|---|---|---|---|---|
| | PO60 | | | |
| Hardness (g) (POfIV64+3%) | 194.7 | 332.6 | 223.9 | 234.3 |
| ratio P₂St/PPP | 1.47 | 1.52 | 0.53 | 3.65 |
| P₂St + PSt₂ | 64 | 47 | 26.9 | 54 |

## Claims

1. A fat composition which is the stearin fraction of a product obtained by interesterifying a mixture of palm oil fraction and stearic acid and which comprises:
greater than 75% by weight palmitic acid and stearic acids;
from 1 to 25% by weight oleic acid; and
greater than 20% by weight of combined P₂St and PSt₂ triglycerides, wherein P is palmitic acid and St is stearic acid;
wherein the fat composition has a weight ratio of P₂St:PPP triglycerides of greater than 0.5.

2. Fat composition as claimed in Claim 1 comprising greater than 55 % by weight in total of the triglycerides PPP, P₂St and PSt₂, wherein P is palmitic acid and St is stearic acid.

3. Fat composition as claimed in Claim 1 or Claim 2 comprising greater than 58 % by weight in total of the triglycerides PPP, P₂St and PSt₂, wherein P is palmitic acid and St is stearic acid.

4. Fat composition as claimed in any one of the preceding claims comprising from 60 to 70 % by weight in total of the triglycerides PPP, P₂St and PSt₂, wherein P is palmitic acid and St is stearic acid.

5. Fat composition as claimed in any one of the preceding claims comprising from 10 % to 60 % by weight of stearic acid.

6. Fat composition as claimed in any one of the preceding claims comprising from 5 to 20 % by weight of oleic acid.

7. A process for making the fat composition of any one of the preceding claims comprising the following steps:
(a) Interesterifying a palm oil fraction with a source of stearic acid; and
(b) Fractionating the interesterified product of step (a) to produce a stearin fraction at a yield based on the interesterified product of step (a) of from 8 to 25% by weight.

8. Process as claimed in Claim 7, wherein the interesterification is carried out enzymatically by using a lipase.

9. Use of a fat composition according to any one of Claims 1 to 6 to promote, enhance or accelerate the crystallization of fat or fat blends in confectionery or bakery applications.

## Patentansprüche

1. Fettzusammensetzung, die die Stearinfraktion eines Produkts ist, das durch Umestern einer Mischung aus Palmölfraktion und Stearinsäure erhalten wird, und die umfasst:
zu mehr als 75 Gew.-% Palmitinsäure und Stearinsäuren;
von zu 1 bis 25 Gew.-% Ölsäure; und
zu mehr als 20 Gew.-% kombinierte P₂St- und PSt₂-Triglyceride, wobei P Palmitinsäure ist und St Stearinsäure ist;
wobei die Fettzusammensetzung ein Gewichtsverhältnis von P₂St : PPP-Triglyceriden von mehr als 0,5 aufweist.

2. Fettzusammensetzung nach Anspruch 1, umfassend insgesamt zu mehr als 55 Gew.-% die Triglyceride PPP, P₂St und PSt₂, wobei P Palmitinsäure ist und St Stearinsäure ist.

3. Fettzusammensetzung nach Anspruch 1 oder 2, umfassend insgesamt zu mehr als 58 Gew.-% die Triglyceride PPP, P₂St und PSt₂, wobei P Palmitinsäure ist und St Stearinsäure ist.

4. Fettzusammensetzung nach einem der vorstehenden Ansprüche, umfassend insgesamt von zu 60 bis 70 Gew.-% die Triglyceride PPP, P₂St und PSt₂, wobei P Palmitinsäure ist und St Stearinsäure ist.

5. Fettzusammensetzung nach einem der vorstehenden Ansprüche, umfassend von zu 10 Gew.-% bis 60 Gew.-% Stearinsäure.

6. Fettzusammensetzung nach einem der vorstehenden Ansprüche, umfassend von zu 5 bis 20 Gew.-% Ölsäure.

7. Verfahren zum Herstellen der Fettzusammensetzung nach einem der vorstehenden Ansprüche, umfassend die folgenden Schritte:
(a) Umestern einer Palmölfraktion mit einer Quelle von Stearinsäure; und
(b) Fraktionieren des umgeesterten Produkts aus Schritt (a), um eine Stearinfraktion bei einer Ausbeute basierend auf dem umgeesterten Produkt aus Schritt (a) von zu 8 bis 25 Gew.-% zu produzieren.

8. Verfahren nach Anspruch 7, wobei die Umesterung durch Verwenden einer Lipase enzymatisch durchgeführt wird.

9. Verwendung einer Fettzusammensetzung nach einem der Ansprüche 1 bis 6, um die Kristallisation von Fett oder Fettgemischen in Süßwaren- oder Backanwendungen zu fördern, zu steigern oder zu beschleunigen.

## Revendications

1. Composition de matière grasse qui est la fraction stéarine d'un produit obtenu par interestérification d'un mélange de fraction d'huile de palme et d'acide stéarique et qui comprend :
plus de 75 % en poids d'acide palmitique et d'acides stéariques ;
de 1 à 25 % en poids d'acide oléique ; et
plus de 20 % en poids de triglycérides P₂St et PSt₂ combinés, dans laquelle P est l'acide palmitique et St est l'acide stéarique ;
dans laquelle la composition de matière grasse a un rapport pondéral de triglycérides P₂St:PPP de plus de 0,5.

2. Composition de matière grasse selon la revendication 1 comprenant plus de 55 % en poids au total des triglycérides PPP, P₂St et PSt₂, dans laquelle P est l'acide palmitique et St est l'acide stéarique.

3. Composition de matière grasse selon la revendication 1 ou la revendication 2 comprenant plus de 58 % en poids au total des triglycérides PPP, P₂St et PSt₂, dans laquelle P est l'acide palmitique et St est l'acide stéarique.

4. Composition de matière grasse selon l'une quelconque des revendications précédentes comprenant de 60 à 70 % en poids au total des triglycérides PPP, P₂St et PSt₂, dans laquelle P est l'acide palmitique et St est l'acide stéarique.

5. Composition de matière grasse selon l'une quelconque des revendications précédentes comprenant de 10 % à 60 % en poids d'acide stéarique.

6. Composition de matière grasse selon l'une quelconque des revendications précédentes comprenant de 5 à 20 % en poids d'acide oléique.

7. Procédé de fabrication de la composition de matière grasse selon l'une quelconque des revendications précédentes comprenant les étapes suivantes :
(a) interestérifier une fraction d'huile de palme avec une source d'acide stéarique ; et
(b) fractionner le produit interestérifié de l'étape (a) pour produire une fraction stéarine avec un rendement sur la base du produit interestérifié de l'étape (a) allant de 8 à 25 % en poids.

8. Procédé selon la revendication 7, dans lequel l'interestérification est réalisée par voie enzymatique au moyen d'une lipase.

9. Utilisation d'une composition de matière grasse selon l'une quelconque des revendications 1 à 6 pour favoriser, améliorer ou accélérer la cristallisation de matières grasses ou de mélanges de matières grasses dans des applications de confiserie ou de boulangerie.
